# EUROPEAN PATENT APPLICATION

(11) **EP 4 106 226 A1**
(43) Date of publication of application: **21.12.2022**
(21) Application number: 21180434.9
(22) Date of filing: 18.06.2021
(51) Int. Cl.: H04B 7/185

(54) **METHOD, PLATFORM AND SYSTEM FOR EXTENDING WIRELESS SIGNAL COVERAGE OF A WIRELESS NETWORK**

(71) Applicant: Deutsche Telekom AG, 53113 Bonn (DE)
(72) Inventor: KIM, Ju Hoon, 14947 Nuthe-Urstromtal (DE)
(74) Representative: Braun-Dullaeus Pannen Emmerling Patent- & Rechtsanwaltspartnerschaft mbB

(57) **Abstract**

A method, a platform and a system for extending wireless signal coverage of a wireless network are provided. The method is performed by a platform (200) located in a first wireless signal coverage area (101) provided by an access point (100) of the wireless network, and is configured to provide a second wireless signal coverage area (201). The method comprising: tracking a position of a wireless device (300); predicating a movement of the wireless device (300) based on the tracking result; upon predicting that the wireless device (300) is to be moved out of the first wireless signal coverage area (101) and the second wireless signal coverage area (201), instructing a drone (500) with a wireless signal extender to move to a target geographical position based on the current position of the wireless device (300) to provide a first extended wireless signal coverage area.

## Description

### TECHNICAL FIELD

The present invention relates to a method, a platform and a system for extending wireless signal coverage of a wireless network, in particular, for extending wireless signal coverage of a wireless local area network (WLAN). The present invention also relates to a computer-readable storage medium.

### BACKGROUND

Wireless network devices such as smartphones, wearable devices, tablets and laptops are now more popular than ever. They can connect to the Internet or interconnect with other devices via Wi-Fi, Bluetooth, cellular networks or near field communication (NFC). A user of a wireless network device can be extremely mobile a wireless network such as in a wireless local area network (WLAN). For example, a user who hold a smartphone connected to Wi-Fi may move round in a home network environment. However, the signal reach of a wireless access point (WAP) in the home network environment is limited. The user may move out of the range of the WAP. Therefore, the wireless signal often needs to be relayed by wireless signal extenders.

One or more wireless signal extenders such as repeaters or boosters maybe deployed at a fixed location and used in the home network environment. By using the wireless signal extenders, Wi-Fi signal coverage can be extended. However, it is often impossible to cover every blind spot especially when the house is too large or when the wireless network uses a high frequency. Therefore, there is a need to improve the wireless signal coverage mechanism.

### SUMMARY

An object of the present invention is to extend wireless signal coverage of a wireless network such as WLAN via a drone equipped with a wireless signal extender. In particular, the wireless signal coverage of the wireless network can be dynamic extended by deploying the drone with the wireless signal extender according to a movement of a wireless device connected to the wireless network.

This object is solved by the subject matter of the independent claims. Advantageous embodiments of the invention are subject matter of the dependent claims.

According to a first aspect of the invention, the invention provides a method for extending wireless signal coverage of a wireless network, performed by a platform equipped with a wireless signal extender, the platform is located in a first wireless signal coverage area provided by an access point of the wireless network, and is configured to communicate with the access point to provide a second wireless signal coverage area, the method comprising:
- tracking a position of a wireless device in the wireless network;
- predicating a movement of the wireless device based on the tracking result;
- upon predicting that the wireless device is to be moved out of the first wireless signal coverage area and the second wireless signal coverage area, instructing a drone with a wireless signal extender to move to a target geographical position in the second wireless signal coverage area based on the current position of the wireless device to provide a first extended wireless signal coverage area via the wireless signal extender of the drone.

According to a second aspect of the invention, the invention provides a method for extending wireless signal coverage of a wireless network, performed by a platform equipped with a wireless signal extender, the platform is located in a first wireless signal coverage area provided by an access point of the wireless network, and is configured to communicate with the access point to provide a second wireless signal coverage area, the method comprising:
- tracking a position of a wireless device in the wireless network;
- predicating a movement of the wireless device based on the tracking result;
- upon predicting that the wireless device is to be moved out of the first wireless signal coverage area, the second wireless signal coverage area and a third wireless signal coverage area, instructing a drone with a wireless signal extender to move to a target geographical position in the third wireless signal coverage area based on the current position of the wireless device to provide a first extended wireless signal coverage area via the wireless signal extender of the drone, wherein the third wireless signal coverage area is a wireless signal coverage area provided by a standby station or provided by an operating drone with a wireless signal extender.

According to third aspect of the invention, the invention provides a platform for extending wireless signal coverage of a wireless network, deployed in a first wireless signal coverage area provided by an access point of the wireless network, wherein the platform comprises:
a wireless signal extender configured to communicate with the access point to provide a second wireless signal coverage area, and a processor coupled to the wireless signal extender;
wherein the processor is configured to perform the method according to the first aspect or the second aspect.

According to a fourth aspect of the invention, the invention provides a system for extending a wireless signal coverage of a wireless network, comprising: the platform according to the third aspect and a drone with a wireless signal extender.

According to any one of the aspects mentioned above, the platform predicts the movement of the wireless device, e.g. by artificial intelligent. When the platform predicting that the wireless device is going to move out of a network coverage area of the wireless network, and before the wireless device moves out of the network coverage area, the platform instructs the drone with the wireless signal extender to move to the target geographical position based on the current position of the wireless device to provide the first extended wireless signal coverage area. This provides the advantage that a wireless signal coverage of the wireless network can be dynamically adjusted by deploying a drone with a wireless signal extender based on the movement of the wireless device. Preferably, the position of the drone and the first extended wireless signal coverage area may be dynamically adjusted to follow the movement of the wireless device.

### BRIEF DESCRIPTION OF THE DRAWINGS

In the following, preferred implementation examples of the present invention are explained with reference to the accompanying Fig.:
- Fig. 1:: shows a diagram illustrating a system for extending a wireless signal coverage of a wireless network in accordance with a first embodiment of the present invention;
- Fig. 2:: shows a diagram illustrating a system for extending a wireless signal coverage of a wireless network in accordance with a second embodiment of the present invention;
- Fig. 3:: shows a diagram of a system for extending a wireless signal coverage of a wireless network in a first example scenario;
- Fig. 4:: shows a diagram of a system for extending a wireless signal coverage of a wireless network in a second example scenario;
- Fig. 5:: shows a diagram of a system for extending a wireless signal coverage of a wireless network in a third example scenario;
- Fig. 6:: shows a diagram of a system for extending a wireless signal coverage of a wireless network in a fourth example scenario;
- Fig. 7:: shows a diagram of a system for extending a wireless signal coverage of a wireless network in a fifth example scenario;
- Fig. 8:: shows a diagram of a method for extending wireless signal coverage of a wireless network in accordance with an embodiment of the present invention;
- Fig. 9:: shows a diagram of a platform for extending wireless signal coverage of a wireless network in accordance with an embodiment of the present invention.

Embodiments of the present invention provide a method, a platform, a system to dynamic adjust (e.g. extend) a wireless signal coverage of a wireless network by activating or deactivating a drone with a wireless signal extender based on a movement of a wireless device (e.g. a mobile terminal) connected to the wireless network.

The platform may track and predict the movement of the wireless device. When it is predicted that the wireless device is going to move out of network coverage area of the wireless network, the platform may instruct the drone with the wireless signal extender to move to a target geographical position to provide an extended wireless signal coverage area for the wireless device. The platform may also periodically send position information (e.g. coordinates) of the wireless device to the drone so that the drone can autonomous follow the wireless device based on the position information from the platform. Optionally, the platform is a multi-function platform. The platform can be equipped with a wireless signal extender to extend the wireless signal coverage of the wireless network. The platform may also be capable of charging or recharging a drone.

Within the context of the present invention, a wireless network may be a wireless local area network (WLAN). Accordingly, an access point of the wireless network is a wireless access point (WAP) of WLAN, also known as a wireless router. The WAP allows wireless devices to connect to a wired network using Wi-Fi. Alternatively, a wireless network may refer to a cellular network using mobile telecommunication cellular network technologies such as GSM/2G, WCDA/3G, LTE/4G, or 5G to transfer data. In this case, the access point may be a base station of a GSM/2G network, a NodeB of a WCDMA/3G network, an evolved Node B (eNB) of LTE network or gNB of 5G network.

Within the context of the present invention, the term "drone" may refer to unmanned aerial vehicles (UAV). The term "drone" may also refer to any automatic machine that is capable of moving autonomously such as an unmanned vehicular device, a robotic device (e.g. unmanned ground vehicles or underwater robots), etc.

Within the context of the present invention, a platform may be implemented by a station or a docking station. The station or the docking station may be equipped with a wireless signal extender capable of communicating with an access point of a wireless network, e.g. equipped with a Wi-Fi signal extender. Alternatively, a platform may also be implemented by a drone with a wireless signal extender.

Within the context of the present invention, the term "wireless signal extender" may be any type of signal extender, signal repeater, signal boosters, etc., that is capable of extending wireless communication links of a wireless network such as a WLAN. In some examples, the term "wireless signal extender" refer to a Wi-Fi signal extender.

Within the context of the present invention, the term "wireless device" may be any type of mobile devices such as mobile phones, smartphones, user equipment, personal computers (e.g., notebook computers, laptop computers, etc.), electronic tablets, personal digital assistants, gaming devices, etc. The term "wireless device" may also refer to any network end-device that is capable of connecting to a wireless network via an access point, e.g. a WiFi-connected device, a device equipped with a subscriber identity module (SIM), a printer, a camera, etc.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

For exemplary purposes only, most of the embodiments are outlined in relation to a wireless network being WLAN. It should be noted that the invention may be advantageously used for example to a wireless network other than WLAN, e.g. a cellular network.

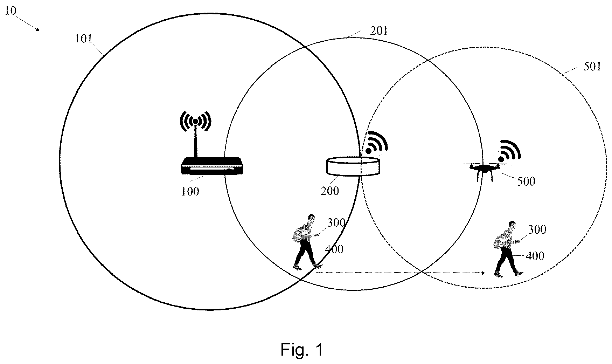

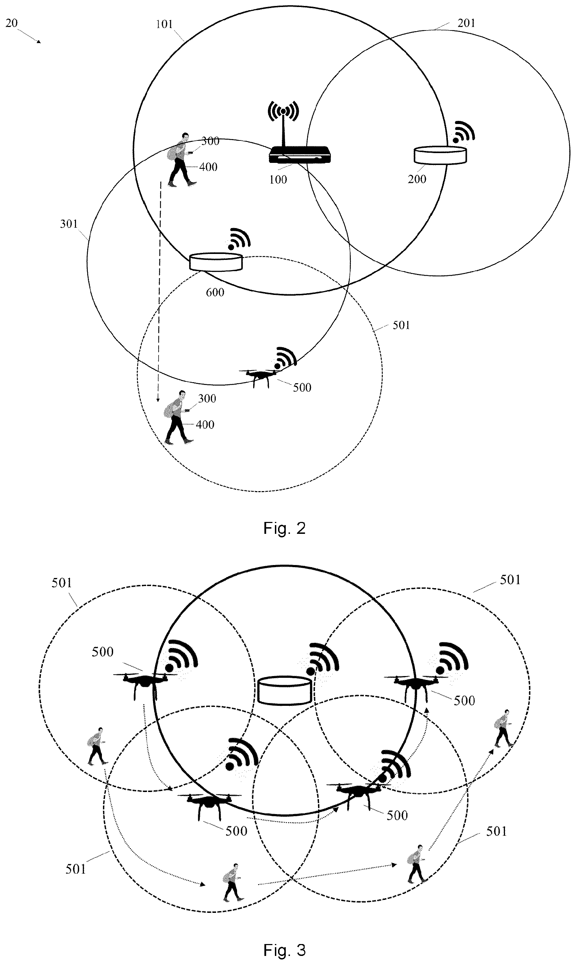

Fig. 1 shows a diagram illustrating a system 10 for extending a wireless signal coverage of a wireless network according to one embodiment of the present invention. Fig. 2 shows a diagram illustrating a system 20 for extending a wireless signal coverage of a wireless network according to another embodiment of the present invention. The system 10 or 20 may comprise a platform 200 located in a first wireless signal coverage area 101 provided by an access point 100 of the wireless network. The platform 200 comprises a wireless signal extender configured to communicate with the access point to provide a second wireless signal coverage area 201.

To extend the wireless signal coverage of the wireless network, the system 10 or 20 may further comprise one or more drones such as drone 500. Each of the one or more drones is equipped with a wireless signal extender such as a Wi-Fi signal extender which is capable of relaying a wireless signal of the wireless network and extending wireless signal coverage area of the wireless network.

Optionally, the platform 200 may be further configured to initiate a communication connection with the access point 100, or a station of the system or a drone of the system 10 or 20. For example, the platform 200 may be configured to initiate the communication connection based on Wi-Fi Protected Setup (WPS). Optionally, a drone of the system 10 or 20 may be further configured to initiate a communication connection with the platform 200 or a station of the system 10 or 20, e.g. based on Wi-Fi Protected Setup. In some examples, a drone of the system 10 or 20 may be capable of identifying or recognizing the platform 200 and landing on the platform 200 autonomously.

Optionally, the platform 200 may be further configured to wirelessly charging or recharging a drone when the drone is landed on the platform 200 or when the drone is near the platform 900, e.g. not far away than a predefined distance. In some examples, the platform 200 may be configured to charge or recharge a drone wirelessly based on quick wireless charging technology, so that the drone can be charged by the platform 900 very quickly.

In the wireless network, a wireless device 300 is connected to the wireless network and communicated with the access point 100 directly or communicated with the access point 100 via the platform 200 or via a station or a drone of the system 10 or 20.

Referring to Fig. 1, in one embodiment, a network coverage area of the wireless network comprises the first wireless signal coverage area 101 and the second wireless signal coverage area 201. The wireless device 300 may move to different positions by a user 400. The platform 200 is configured to track a position of the wireless device 300 in the wireless network, predicate a movement of the wireless device 300 based on the tracking result, and upon predicting that the wireless device 300 is to be moved out of the first wireless signal coverage area 101 and the second wireless signal coverage area 201 (but before the wireless device 300 moves out of the first wireless signal coverage area 101 and the second wireless signal coverage area 201), instruct a drone (e.g. drone 500) of the system 10 with a wireless signal extender to move to a target geographical position in the second wireless signal coverage area 201 based on the current position of the wireless device 300 to provide a first extended wireless signal coverage area (e.g. 501 in Fig. 1) via the wireless signal extender of the drone (e.g. drone 500).

By doing this, a total coverage area of the wireless network will be extended to include the first extended wireless signal coverage area in addition to the network coverage area (101 and 201), so that the wireless device 300 can remain the connection the wireless network even after the wireless device 300 moves out of the first wireless signal coverage area 101 and the second wireless signal coverage area 201.

The drone of the system 10, e.g. drone 500, is configured to: upon receiving the instruction from the platform 200, move to the target geographical position in the second wireless signal coverage area 201 based on the current position of the wireless device, and communicate with the platform 200 to provide the first extended wireless signal coverage area (e.g. 501) via the wireless signal extender of the drone.

Optionally, the drone maybe further configured to adjust its position based on position information of the wireless device 300 such that the drone can dynamically follow the wireless device 300 to maximize coverage area and/or to enhance signal strength and quality for the wireless device 300.

Referring to Fig. 2, in another embodiment, the system 20 may further comprise device 600, the device 600 may be a standby station or an operating drone which comprises a wireless signal extender capable of providing a third wireless signal coverage area 301. The standby station may be for example a station, or the operating drone is any drone other than the drone 500. The network coverage area of the wireless network comprises the first wireless signal coverage area 101, the second wireless signal coverage area 201, and the third wireless signal coverage area 301.

The platform 200 is configured to track a position of the wireless device 300, predicate a movement of the wireless device 300 based on the tracking result, and upon predicting that the wireless device is to be moved out of the first wireless signal coverage area 101, the second wireless signal coverage area 201 and the third wireless signal coverage area 301 (e.g. upon predicting that the wireless device is to be moved out of the network coverage area), instruct a drone (e.g. drone 500) of the system 20 with a wireless signal extender to move to a target geographical position in the third wireless signal coverage area 301 based on the current position of the wireless device 300 to provide a first extended wireless signal coverage area (e.g. wireless signal coverage area 501 in Fig. 2) via the wireless signal extender of the drone (e.g. drone 500). In this way, the total coverage area of the wireless network will be extended to further include the first extended wireless signal coverage area 501.

The drone of the system 20, e.g. drone 500, is configured to: upon receiving the instruction from the platform 200, move to the target geographical position in the third wireless signal coverage area 301 based on the current position of the wireless device, and communicate with the platform 200 to provide the first extended wireless signal coverage area (e.g. wireless signal coverage area 501) via the wireless signal extender of the drone.

Preferably, in the embodiments of Figs. 1 and 2, the platform 200 is configured to sense or track a position or a movement of the wireless device 300 based on Wi-Fi sensing technology (also referred to as WLAN sensing) or Wi-Fi positioning technology. In this case, the wireless network may be WLAN. The wireless device 300 is a device connected to the WLAN via Wi-Fi. By using the Wi-Fi sensing technology, events or changes such as a motion, a gesture recognition or a biometric measurement (e.g. breathing) can be detected via Wi-Fi signals of the wireless network. The Wi-Fi sensing technology can also work in ad-hoc mode to maximize the sensing area through multiple stations of the wireless network.

In some examples, Wi-Fi positioning technology, e.g. Wi-Fi positioning with access point or Wi-Fi positioning with sensor, can be used to sense or track a position or a movement of the wireless device 300. Based on Wi-Fi positioning with access point, access points of WLAN can be used to detect transmissions from surrounding Wi-Fi devices and send location data to a server or a central indoor positioning system (IPS) for calculating a position or a movement of the Wi-Fi devices. Or by using Wi-Fi positioning with sensor, sensors can be used to passively detect and locate transmissions from a Wi-Fi device and send location information of the Wi-Fi device for determining a position or a movement of the Wi-Fi device. Herein, other Wi-Fi positioning techniques can also be used. Embodiments of the present invention is not limited to a specific Wi-Fi positioning technique. Preferably, Wi-Fi positioning technique can determine location based on received signal strength indicator (RSSI), RSSI Multilateration, RSSI Fingerprinting, Time-of-Flight (ToF) or Angle of Arrival (AoA).

Alternatively, or additionally, the platform 200 is configured to track a position or a movement of the wireless device 300 based on the signal strength of the wireless signal from the wireless device 300.

With respect to predicating a movement of the wireless device 300, in some examples, the platform 200 may be configured to predicate a movement of the wireless device 300 based on the tracking result by using artificial intelligent (Al).

For example, the platform 200 may be configured with Al technique (e.g. machine learning technique) to predict the direction of the movement of the wireless device 300 and to estimate the time taken for moving out from the network coverage area (coverage areas 101, 201 of system 10 or coverage areas 101, 201 and 301 of system 20) based on coordination and movement speed detected based on the Wi-Fi positioning technique. In an example, when the estimated time is equal to or less than a time threshold, the platform 200 predicts that the wireless device 300 is to be moved out of the network coverage area. Al-based prediction has the advantage of predicting the movement of the wireless device 300 very accurately such as by considering a usual moving pattern of the user of the wireless device 300 (e.g. how user normally move around when an obstacle is in front of him). Herein, different Al techniques or machine learning techniques can be used. Embodiments of the present invention is not limited to a specific Al technique or a specific machine learning technique.

Alternatively, or additionally, the platform 200 may be configured to obtain the position of the wireless device 300 (e.g. three-dimensional coordinates, or two-dimensional coordinates), moving direction and movement speed of the wireless device 300 based on the tracking result, then predicate a movement of the wireless device 300 based on these information.

In some examples of the embodiments of Figs. 1 and 2, the platform 200 may be configured to instruct the drone 500 to move to the target geographical position by sending a specific instruction via a wireless signal of the wireless network. Optionally, the specific instruction may carry information about the target geographical position, e.g. coordinates of the target geographical position or coverage range about the first extend wireless signal coverage area 501. In this case, the platform 200 may determine the target geographical position for the drone 500 and send the information about the target geographical position to the drone. In another example, the specific instruction may carry position information of the wireless device 300, e.g. three-dimensional coordinates, two-dimensional coordinates or distance of wireless device 300, the drone 500 may determine the target geographical position by itself based on the received position information of the wireless device 300.

Alternatively or additionally, in the embodiments of Figs. 1 and 2, the platform 200 may be configured to instruct the drone (e.g. drone 500) with the wireless signal extender to move to the target geographical position by sending position information of the wireless device 300 (e.g. three-dimensional coordinates, two-dimensional coordinates or distance of wireless device 300 with respect to the platform) to the drone 500, or by activating the drone 500 with the wireless signal extender and sending the position information of the wireless device.

Optionally, the platform 200 may be configured to activate the drone 500 with the wireless signal extender before instructing the drone (500 to move to the target geographical position. In this case, the drone 500 may be in an inactive mode to save power and energy. In the inactive mode, the wireless signal extender of the drone 500 may be deactivated. The other component of the drone which is not necessary for receiving and processing an instruction for activating the drone 500 from the platform 200 may also be deactivated. Upon receiving the instruction for activating the drone 500, the drone 500 may return to a normal mode and/or the drone 500 may activating the wireless signal extender. Alternatively, or additionally, the platform 200 may be configured to send current position information of the wireless device 300 to the drone 500, so that the drone 500 may use the current position information of the wireless device 300 to move to the target geographical position based on the instruction received from the platform 200.

Referring to Fig. 1, when the wireless device is going to move out of the second coverage area 201 and the first coverage area 101, the target geographical position is within the second coverage area 201 so that the drone 500 with the wireless signal extend can communicate with the platform 200 to provide the first extended wireless signal coverage area 501. Advantageously, the target geographical position is near the boundary of the second wireless signal coverage area 201 to maximize the total coverage area of the wireless network. Optionally or additionally, the target geographical position is a position in the second coverage area 201 where the drone 500 is located to near the wireless device 300 to ensure a strong signal strength.

Referring to Fig. 2, similarly, when the wireless device 300 is going to move out of the third coverage area 301, the second coverage area 201 and the first coverage area 101, the target geographical position may be within the third coverage area 301, e.g. is near the boundary of the third wireless signal coverage area 301, so that the drone 500 with the wireless signal extend can communicate with the device 600 to provide the first extended wireless signal coverage area 501.

Optionally, the system 10 or 20 may further comprise other device such as a station, a wireless signal extender or a drone which is capable of providing a wireless signal coverage area for the wireless network.

According to any one of the embodiments mentioned above, in a preferred embodiment, the drone 500 may be capable of dynamically adjusting its position to follow the movement of the wireless device 300 as shown in an example scenario of Fig. 3.

In this case, the platform 200 may be further configured to periodically send position information of the wireless device 300 to the drone 500 with the wireless signal extender. Correspondingly, the drone 500 is further configured to periodically receive position information of the wireless device 300 from the platform 200, and adjust its position based on the periodically received position information of the wireless device 300 to follow the wireless device 300. Preferably, the drone 500 is specifically configured to adjust its position based on the received position information of the wireless device 300 while ensuring that its position is near the boundary of the second wireless signal coverage area 201 or near the boundary of the third wireless signal coverage area 301, such that the total coverage area of the wireless network is maximized.

In the example scenario of Fig. 3, a user holding the wireless device 300 may move around. In some examples, the drone 500 of Fig. 1 or 2 is further configured to periodically receive position information of the wireless device 300 from the platform 200, and dynamically adjust its position based on the periodically received position information of the wireless device 300 to follow the wireless device 300. In this way, the position of the first extended wireless signal coverage area 501 provided by the drone 500 is also changed upon the movement of the drone 500. The drone 500 may be located near the boundary of the second wireless signal coverage area or near the boundary of the third wireless signal coverage area when following the wireless device 300, so that that the total coverage area of the wireless network is maximized.

According to any one of the embodiments mentioned above, in a preferred embodiment, the platform 200 may call back and/or deactivate the drone 500 when the wireless device 300 comes back to the network coverage area or when the wireless device 300 moves out of the total coverage area of the wireless network.

In this scenario, the platform 200 may be configured to: when detecting that the wireless device 300 is moved back to the network coverage area of the wireless network or when detecting that the wireless device is moved out of the network coverage area and the first extended wireless signal coverage area (that is, the total coverage area), instruct the drone 500 to move to the platform 200 or a standby station of the wireless network for charging the drone 500 or for deactivating the drone 500. In one example, the drone 500 may be charged by the platform 200 or a standby station wirelessly when the drone is on or around the platform 200 or the standby station. The standby station maybe any station or device of the system 10 or 20 which is capable of charging the drone 500. In another example, the drone 500 may be deactivated to save power when it moves to the platform 200 or move to the standby station.

When referring to Fig. 1, the network coverage area comprises the first wireless signal coverage area 101 and the second wireless signal coverage area 201. Optionally, when referring to the system 20 of Fig. 2, the network coverage area comprises the first wireless signal coverage area, the second wireless signal coverage area and the third wireless signal coverage area.

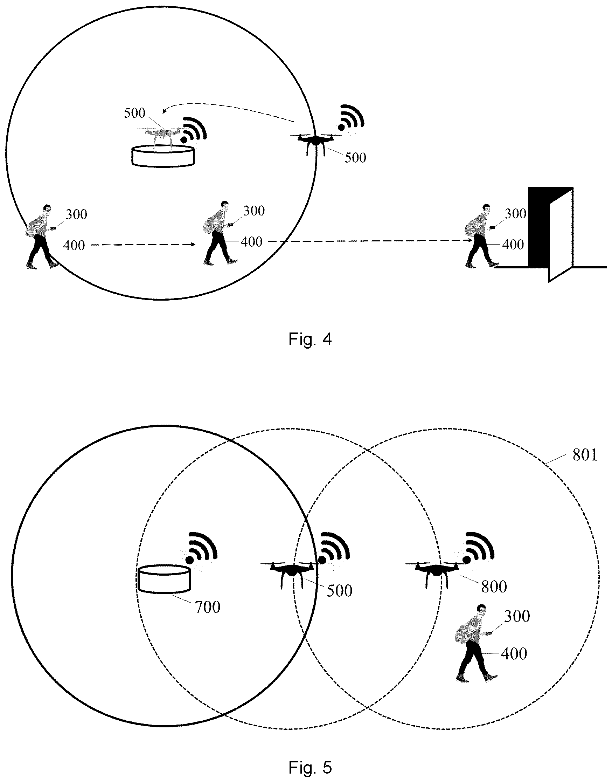

Fig. 4 shows an example scenario where the wireless network is WLAN, e.g. in a home network environment. Once the user 400 holding the wireless device 300 moves out of the total coverage area, e.g. leaving the house of the home network, the platform 200 instruct the drone 500 to move back to the platform 200 or move to another station of the system 10 or 20 and then deactivate the drone 500. In an example, the drone 500 can be charged by the platform or the other station of the system 10 or 20.

According to any one of the embodiments mentioned above, in a preferred embodiment, the system 10 or 20 comprises multiple drones, each of the multiple drones is equipped with a wireless signal extender. One of the multiple drones is the drone 500. The multiple drones are used in the system 10 or 20 to repeat or relay the wireless signal of the wireless signal even further.

In some examples, the platform 200 is configured to: upon predicting that the wireless device 300 is to be moved out of the network coverage area, instruct at least two drones of the multiple drones to move to geographical positions based on the current position of the wireless device 300 to provide extended wireless signal coverage areas, wherein one of the at least two drones is the drone 500.

In the example as shown in Fig. 5, the system 10 or 20 comprises at least the drone 500 and a drone 800. The drone 500 is further configured to: detect a signal strength of a wireless signal from a target device 700 and when the detected signal strength is lower than a predefined value, move to a safe coverage area within a wireless signal coverage area provided by the target device 700, and then send a report to the platform 200 to indicate that the signal strength of the wireless signal from the target device is lower than the predefined value (e.g. the wireless signal from the target device 700 is too weak to reply or to repeat), wherein the safe coverage area is a coverage area within the wireless signal coverage area provided by the target device 700 where a signal strength of a wireless signal from the target device is not lower than the predefined value. The target device 700 herein may be the platform 200. Alternatively, the target device 700 herein may be the standby station or the operating drone which provides the third wireless signal coverage area 301.

Optionally, the platform 200 may receive the report from the drone 500, and in response to the reception of the report, deploy another drone 800 with a wireless signal extender to communicate with the drone 500 to provide a second extended wireless signal coverage area 801.

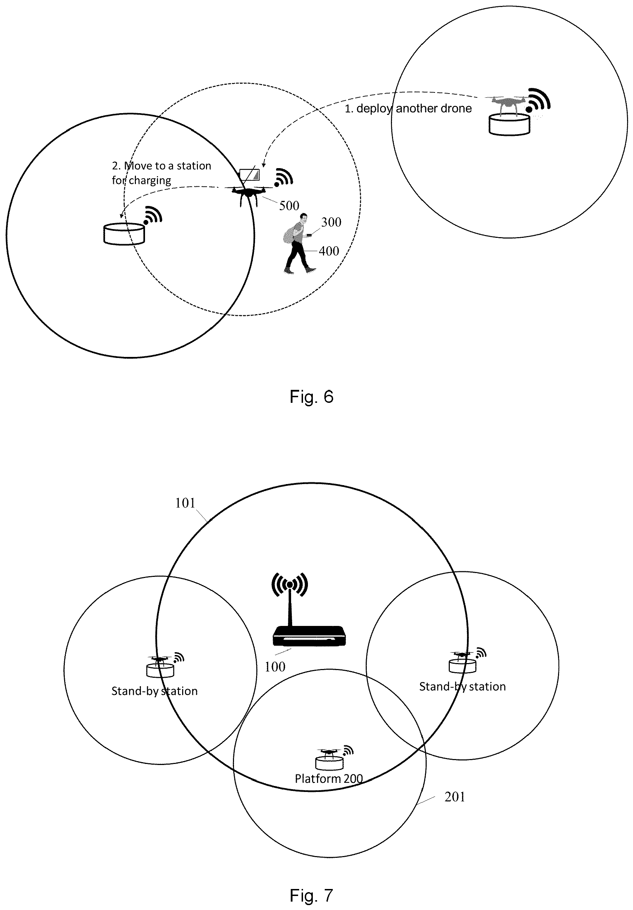

According to any one of the embodiments mentioned above, in a preferred embodiment as shown in Fig. 6, when the battery of the drone 500 runs out, the drone 500 can report battery status to the platform 200. The platform 200 then order or deploy another drone of the system 10 or 20 (if available) to replace the drone 500 so that the drone 500 can go to the platform 200 or a nearby device for charging its battery.

More specifically, the drone 500 may be configured to send a low battery report to the platform 200 when the battery of the drone 500 is lower than a predefined minimum value, the low battery report indicates that the drone 500 needs to be charged or recharged.

Correspondingly, the platform 200 can be configured to: upon receiving the low battery report from the drone 500, deploy another drone to a current position of the drone 500 to replace the drone 500, and instruct the drone 500 to move to the platform 200 or a standby station of the wireless network for charging or recharging. The standby station maybe any device of the system 10 or 20 which is capable of charging or recharging the drone 500, preferably, the standby station is a device near the drone 500 which is capable of charging or recharging the drone 500.

According to any one of the embodiments mentioned above, in a preferred embodiment, in order to save the battery of the drone 500 for increasing lifetime of the battery, the drone 500 is configured to fly in the air to provide the first extended wireless signal coverage area 501 only when the wireless device 300 is moving or moving fast. The drone 500 is configured to stay on the ground or resting on a stationary object to provide the first extended wireless signal coverage area 501 when the wireless device 300 is stationary or moving slowly. For example, the drone 500 may detect whether the wireless device 300 is moving or moving slowly by using camera or signal strength.

According to any one of the embodiments mentioned above, in a preferred embodiment, the system 10 or 20 comprises multiple stations, one of the multiple stations is configured as the platform 200, each of the rest stations is configured as a standby station. In some examples, the platform 200 works as a master station, the standby station works as a slave station which can relay instruction from the master station to a drone.

The standby station may be configured to forward a communication from the platform 200 to any other station of the system or to any drone of the system, or to forward a communication from any other station of the system or any drone of the system to the platform 200. Optionally, the platform 200 is capable of orchestrating activities of all drones of the system 10 or 20.

Optionally, the standby station may be further configured to wirelessly charging or recharging a drone when the drone is landed on the standby station or when the drone is near the standby station, e.g. not far away than a predefined distance. In some examples, the standby station may be configured to charge or recharge a drone wirelessly based on quick wireless charging technology, so that the drone can be charged very quickly.

According to any one of the embodiments mentioned above, in a preferred embodiment, mesh network technology is used in the system 10 or 20 to update network topology among all nodes of the system 10 or 20 (e.g. drone 500, platform 200, access point 100, device 600, wireless device 300) in agile and seamless manner. By using mesh network technology, the nodes of the system 10 or 20 are all connected to each other, and the nodes can connect directly and dynamically. The mesh network can dynamically self-organize and self-configure, and thus reduce installation and reconfiguration overhead and time for reconfiguration.

Fig. 7 shows an example scenario where the system 10 or 20 comprises multiple standby stations and the platform 200. When the platform 200 is unavailable, the multiple standby stations may be configured to select a standby station among the multiple standby stations as a new platform 200 for replacing the platform 200. In some examples, the multiple standby stations may select one of them as a new platform based on the reachability to other stations of the system and/or signal strength as decision parameters.

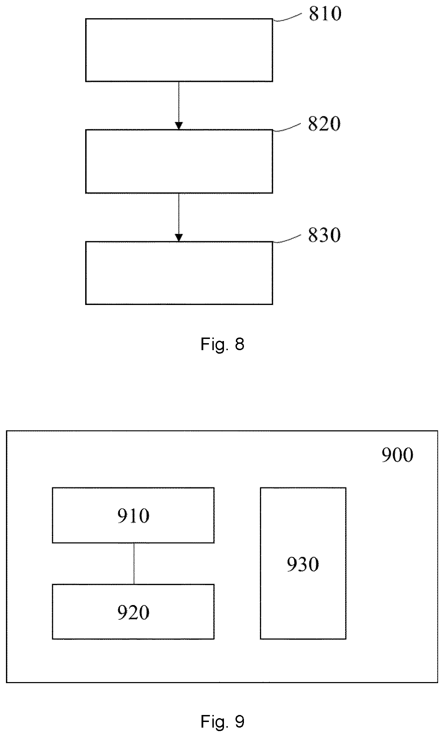

Fig. 8 shows a method for extending wireless signal coverage of a wireless network. The method may be performed by the platform 200 mentioned in previous embodiments, wherein the platform 200 is equipped with a wireless signal extender, and is located in the first wireless signal coverage area 101 provided by the access point 100 of the wireless network. The platform 200 is configured to communicate with the access point 100 to provide the second wireless signal coverage area 201.

The method comprises the following steps:
Step 810: tracking a position of a wireless device 300 in the wireless network.
Step 820: predicating a movement of the wireless device 300 based on the tracking result.
Step 830: upon predicting that the wireless device 300 is to be moved out of the first wireless signal coverage area 101 and the second wireless signal coverage area 201, instructing a drone 500 with a wireless signal extender to move to a target geographical position in the second wireless signal coverage area 201 based on the current position of the wireless device 300 to provide a first extended wireless signal coverage area 501 via the wireless signal extender of the drone 500.

Alternatively, the step 830 may be: upon predicting that the wireless device 300 is to be moved out of the first wireless signal coverage area 101, the second wireless signal coverage area 201 and a third wireless signal coverage area 301, instructing a drone with a wireless signal extender to move to a target geographical position in the third wireless signal coverage area 301 based on the current position of the wireless device 300 to provide a first extended wireless signal coverage area 501 via the wireless signal extender of the drone 500, wherein the third wireless signal coverage area 301 is a wireless signal coverage area provided by a standby station or provided by an operating drone with a wireless signal extender.

Optionally, before performing the structing in step 830, the method may further comprise activating the drone 500 with the wireless signal extender. In this case, the drone 500 may be deactivated when it is not operated to extend wireless signal to save energy. So before instructing the drone 500 to move to the target geographical position, the platform 200 needs to activate the drone 500. Additionally or alternatively, before performing the structing in step 830, the method may further comprise sending the current position information of the wireless device 300 to the drone 500.

Optionally, the method may further comprises periodically sending position information of the wireless device 300 to the drone 500 with the wireless signal extender so as to enable the drone 500 with the wireless signal extender to adjust its position based on the position information of the wireless device 300 from the platform 200 to follow the wireless device 300.

Optionally, the method further comprises when detecting that the wireless device 300 is moved back to a network coverage area of the wireless network or when detecting that the wireless device 300 is moved out of the network coverage area and the first extended wireless signal coverage area 501, instructing the drone 500 to move to the platform 200 or to move to a standby station of the wireless network, wherein the network coverage area comprises the first wireless signal coverage area 101 and the second wireless signal coverage area 201, or comprises the first wireless signal coverage area 101, the second wireless signal coverage area 201 and the third wireless signal coverage area 301.

In some examples, after the drone 500 moving to the platform 200, the method further comprises charging the drone 500 and/or deactivating the drone 500, or after the drone 500 moving to the standby station, the method further comprises instructing the standby station to charging the drone 500 and/or deactivating the drone 500 via the standby station.

Optionally, the method further comprises receiving a report from the drone 500; wherein the report indicates that a signal strength of a wireless signal is lower than a predefined value; in response to the reception of the report, deploy another drone with a wireless signal extender to communicate with the drone 500 to provide a second extended wireless signal coverage area.

Optionally, the method further comprises receiving a low battery report from the drone 500, the low battery report indicates that the drone 500 needs to be charged, and in response to the reception of the low battery report, deploying another drone with a wireless signal extender to a current position of the drone 500 for replacing the drone 500; and instructing the drone 500 to move to the platform 200 or a standby station of the wireless network for charging.

Fig. 9 shows a block diagram of a platform 900 for extending wireless signal coverage of a wireless network. The platform 900 is deployed in a first wireless signal coverage area provided by an access point of the wireless network. The platform 900 comprises:
a wireless signal extender 910 configured to communicate with the access point 100 to provide a second wireless signal coverage area 201, and
a processor 920 coupled to the wireless signal extender.

The processor 920 is configured to: track a position of a wireless device in the wireless network; predicate a movement of the wireless device based on the tracking result; upon predicting that the wireless device is to be moved out of the first wireless signal coverage area and the second wireless signal coverage area, instruct a drone with a wireless signal extender to move to a target geographical position in the second wireless signal coverage area based on the current position of the wireless device to provide a first extended wireless signal coverage area via the wireless signal extender of the drone, or upon predicting that the wireless device is to be moved out of the first wireless signal coverage area, the second wireless signal coverage area and a third wireless signal coverage area, instructing a drone with a wireless signal extender to move to a target geographical position in the third wireless signal coverage area based on the current position of the wireless device to provide a first extended wireless signal coverage area via the wireless signal extender of the drone, wherein the third wireless signal coverage area is a wireless signal coverage area provided by a standby station or provided by an operating drone with a wireless signal extender.

Optionally, the platform 900 comprises a charging unit 930 capable of charging or recharging a drone. Preferably, the charging unit 930 is configured to charge or recharging a drone wirelessly when the drone is on the platform 900 (e.g. when the drone land on the platform) or when the drone is near the platform 900, e.g. not far away than a predefined distance. In some examples, the charging unit 930 is configured to charge or recharge a drone wirelessly based on quick wireless charging technology, so that the drone can be charged by the platform 900 very quickly.

In this embodiment, the platform 900 may be the platform 200 mentioned in any one of previous embodiments. The processor 920 may be configured to perform the method in any one of previous embodiments such as the method in Fig. 8. Implementation details are not described herein again.

In another embodiment, a computer-readable storage medium comprising executable instruction to configure a processor on a platform equipped with a wireless signal extender to perform the method mentioned in any one of previous embodiments such as the method in Fig. 8. Details are not described herein again.

In another embodiment, a computer program product is provided. The computer program product comprises an instruction, wherein when the computer program product is run on a platform with a wireless signal extender, the platform is enabled to perform the method mentioned in any one of previous embodiments such as the method in Fig. 8. Details are not described herein again. Preferably, the computer program product is run on a processor of the platform.

While some embodiments have been described in detail it is to be understood that aspects of the disclosure can take many forms. In particular, the claimed subject matter may be practiced or implemented differently from the examples described and the described features and characteristics may be practiced or implemented in any combination. The embodiments shown herein are intended to illustrate rather than to limit the invention as defined by the claims.

## Claims

1. A method for extending wireless signal coverage of a wireless network, performed by a platform (200) equipped with a wireless signal extender, the platform (200) is located in a first wireless signal coverage area (101) provided by an access point (100) of the wireless network, and is configured to communicate with the access point (100) to provide a second wireless signal coverage area (201), the method comprising:
tracking a position of a wireless device (300) in the wireless network;
predicating a movement of the wireless device (300) based on the tracking result;
upon predicting that the wireless device (300) is to be moved out of the first wireless signal coverage area (101) and the second wireless signal coverage area (201), instructing a drone (500) with a wireless signal extender to move to a target geographical position in the second wireless signal coverage area (201) based on the current position of the wireless device (300) to provide a first extended wireless signal coverage area (501) via the wireless signal extender of the drone (500); or
upon predicting that the wireless device (300) is to be moved out of the first wireless signal coverage area (101), the second wireless signal coverage area (201) and a third wireless signal coverage area (301), instructing a drone with a wireless signal extender to move to a target geographical position in the third wireless signal coverage area (301) based on the current position of the wireless device (300) to provide a first extended wireless signal coverage area (501) via the wireless signal extender of the drone (500), wherein the third wireless signal coverage area (301) is a wireless signal coverage area provided by a standby station or provided by an operating drone with a wireless signal extender.

2. The method according to claim 1, before performing the instructing, the method further comprises: activating the drone (500) with the wireless signal extender; and/or sending the current position information of the wireless device (300) to the drone (500).

3. The method according to claim 1 or 2, further comprising: periodically sending position information of the wireless device (300) to the drone (500) with the wireless signal extender so as to enable the drone (500) with the wireless signal extender to adjust its position based on the position information of the wireless device (300) from the platform (200) to follow the wireless device (300).

4. The method according to any one of claims 1 to 3, further comprising:
when detecting that the wireless device (300) is moved back to a network coverage area of the wireless network or when detecting that the wireless device (300) is moved out of the network coverage area and the first extended wireless signal coverage area (501), instructing the drone (500) to move to the platform (200) or to move to a standby station of the wireless network;
wherein the network coverage area comprises the first wireless signal coverage area (101) and the second wireless signal coverage area (201), or comprises the first wireless signal coverage area (101), the second wireless signal coverage area (201) and the third wireless signal coverage area (301).

5. The method according to claim 4, further comprising: after the drone (500) moving to the platform (200), charging the drone (500) and/or deactivating the drone (500); or
after the drone (500) moving to the standby station, instructing the standby station to charging the drone (500) and/or deactivating the drone (500) via the standby station.

6. The method according to any one of claims 1 to 5, further comprising:
receiving a report from the drone (500); wherein the report indicates that a signal strength of a wireless signal is lower than a predefined value;
in response to the reception of the report, deploy another drone with a wireless signal extender to communicate with the drone (500) to provide a second extended wireless signal coverage area (801).

7. The method according to any one of claims 1 to 6, further comprising:
receiving a low battery report from the drone (500), the low battery report indicates that the drone (500) needs to be charged, and in response to the reception of the low battery report, deploying another drone with a wireless signal extender to a current position of the drone (500) for replacing the drone (500); and instructing the drone (500) to move to the platform (200) or a standby station of the wireless network for charging.

8. A platform (900, 200) for extending wireless signal coverage of a wireless network, deployed in a first wireless signal coverage area provided by an access point of the wireless network, wherein the platform (900, 200) comprises:
a wireless signal extender (910) configured to communicate with the access point to provide a second wireless signal coverage area, and a processor (920) coupled to the wireless signal extender (910);
wherein the processor (920) is configured to perform the method according to any one of claims 1 to 7.

9. A system for extending a wireless signal coverage of a wireless network, comprising: a platform (200) located in a first wireless signal coverage area (101) provided by an access point (100) of the wireless network and a drone with a wireless signal extender, wherein the platform (200) comprises a wireless signal extender configured to communicate with the access point (100) to provide a second wireless signal coverage area (201);
the platform (200) is further configured to:
track a position of a wireless device (300) in the wireless network
predicate a movement of the wireless device (300) based on the tracking result;
upon predicting that the wireless device (300) is to be moved out of the first wireless signal coverage area (101) and the second wireless signal coverage area (201), instruct a drone (500) with a wireless signal extender to move to a target geographical position in the second wireless signal coverage area (201) based on the current position of the wireless device (300) to provide a first extended wireless signal coverage area (501) via the wireless signal extender of the drone (500); or
upon predicting that the wireless device (300) is to be moved out of the first wireless signal coverage area (101), the second wireless signal coverage area (201) and a third wireless signal coverage area (301), instruct a drone with a wireless signal extender to move to a target geographical position in the third wireless signal coverage area (301) based on the current position of the wireless device (300) to provide a first extended wireless signal coverage area (501) via the wireless signal extender of the drone (500), wherein the third wireless signal coverage area (301) is a wireless signal coverage area provided by a standby station or provided by an operating drone with a wireless signal extender;
the drone (500) is configured to: upon receiving the instruction from the platform (200), move to the target geographical position in the second wireless signal coverage area (201) based on the current position of the wireless device (300), and communicate with the platform (200) to provide the first extended wireless signal coverage area (501) via the wireless signal extender of the drone (500); or upon receiving the instruction from the platform (200), move to the target geographical position in the third wireless signal coverage area (301) based on the current position of the wireless device (300), and communicate with the standby station or the operating drone to provide the first extended wireless signal coverage area (501) via the wireless signal extender of the drone (500).

10. The system according to claim 9, the platform (200) is further configured to: periodically send position information of the wireless device (300) to the drone (500) with the wireless signal extender; and
the drone (500) is further configured to: periodically receive position information of the wireless device (300) from the platform (200), and adjust its position based on the periodically received position information of the wireless device (300) to follow the wireless device (300);
optionally, the drone (500) is specifically configured to adjust its position based on the received position information of the wireless device (300) while ensuring that its position is near the boundary of the second wireless signal coverage area (201) or near the boundary of the third wireless signal coverage area (301).

11. The method according to claim 9 or 10, the platform (200) is configured to: when detecting that the wireless device (300) is moved back to a network coverage area of the wireless network or when detecting that the wireless device (300) is moved out of the network coverage area and the first extended wireless signal coverage area (501), instruct the drone (500) to move to the platform (200) or a standby station of the wireless network for charging the drone (500) or for deactivating the drone (500);
wherein the network coverage area comprises the first wireless signal coverage area (101) and the second wireless signal coverage area (201), or comprises the first wireless signal coverage area (101), the second wireless signal coverage area (201) and the third wireless signal coverage area (301).

12. The system according to any one of claims 9 to 11, the drone (500) is further configured to: detect a signal strength of a wireless signal from a target device (700), and when the detected signal strength is lower than a predefined value, move to a safe coverage area within a wireless signal coverage area provided by the target device (700), and then send a report to the platform (200) to indicate that the signal strength of the wireless signal from the target device (700) is lower than the predefined value, wherein the safe coverage area is a coverage area within the wireless signal coverage area provided by the target device (700) where a signal strength of a wireless signal from the target device (700) is not lower than the predefined value ; wherein the target device (700) is the platform (200), the standby station or the operating drone;
optionally, the platform (200) is further configured to: receive the report from the drone (500), and in response to the reception of the report, deploy another drone with a wireless signal extender to communicate with the drone (500) to provide a second extended wireless signal coverage area (801).

13. The system according to any one of claims 9 to 12, the drone (500) is configured to send a low battery report to the platform (200) when the battery of the drone (500) is lower than a predefined minimum value, the low battery report indicates that the drone (500) needs to be charged;
the platform (200) is configured to: upon receiving the low battery report from the drone (500), deploy another drone to a current position of the drone (500) to replace the drone (500), and instruct the drone (500) to move to the platform (200) or a standby station of the wireless network for charging.

14. The system according to any one of claims 9 to 13, comprises multiple stations, one of the multiple stations is configured as the platform (200), each of the rest stations is configured as a standby station;
the standby station is configured to forward a communication from the platform (200) to any other station of the system or to any drone of the system, or to forward a communication from any other station of the system or any drone of the system to the platform (200);
optionally, the system comprises multiple standby stations, and the multiple standby stations are configured to: when the platform (200) is unavailable, select a standby station among the multiple standby stations as a new platform (200) for replacing the platform (200).

15. A computer-readable storage medium comprising executable instruction to configure a processor on a platform (200, 900) with a wireless signal extender to perform the method according to any one of claims 1 to 7.
